# EUROPEAN PATENT APPLICATION

(11) **EP 3 505 288 A1**
(43) Date of publication of application: **03.07.2019**
(21) Application number: 18213685.3
(22) Date of filing: 18.12.2018
(51) Int. Cl.: B23K 9/12, B23K 9/173, B23K 9/18

(54) **WELDING TORCH AND WELDING DEVICE**

(30) Priority: 18.12.2017 NL 2020115
(71) Applicant: Sif Group, 6041 TA Roermond (NL)
(72) Inventor: LAFLEUR, William Wilhelmus Elisabeth, 6041 AN Roermond (NL)
(74) Representative: Nederlandsch Octrooibureau

(57) **Abstract**

The invention relates to a welding torch for a welding device, the welding torch comprising a rectangular body provided with two parallel channels in a longitudinal direction of the rectangular body for guiding electrode wires through the body, wherein each channel has a first part at the entry side of the channel and a second part at the outlet side of the channel, the first part has a first diameter, and a second part has a second diameter, smaller than the first diameter, such that the second part tightly fits around the electrode wire for forming an electrical contact for conducting an electric welding current to electrode wire, wherein the body comprises at least two longitudinal parts, each part provided with at least one groove in the longitudinal direction for forming the channels when the parts are assembled to each other, and a spring loaded connector configured to press to the longitudinal parts together.

## Description

### Field of the invention

The present invention relates to a welding torch for welding of metal parts and a welding device comprising the welding torch.

### Background art

Such a welding device and welding torch is known from CN101712095A. In the known welding torch two electrode wires are fed through the welding torch and form the two electrodes between, which a welding arc can be generated for deposition of molten metal in a narrow gap between the metal parts for joining together the metal parts.

The welding torch can be used in welding devices for welding large cylindrical, conical or tubular structures, such as shells for assembling piles. The piles can be used in, for example, oil & gas platforms or wind turbines. A shell can be formed by rolling a steel plate in a cylindrical / conical shape and welding the connecting sides of the rolled plate. Presently and in the near future the dimensions of these shells are becoming larger. Presently, the diameter of a shell is 8 m. The length of the shell is between 2 and 4 m, and the thickness of the steel plates of the shell is typically between 60 and 120 mm.

Before welding of the rolled plates, grooves (weld preparations) are milled in the connecting sides of the rolled plate in a circumferential direction of the shell in order to obtain welds with a good quality. These grooves are required to accommodate the welding torch in order to deposit welding material starting from the inside the groove to the outside. This milling lead to a removal of material and a need for additional filler material to fill the groove and to obtain the weld.

### Summary of the invention

It is an object of the invention to provide a welding torch and a welding device that enables more efficient welding of the shells. This object can be achieved by the welding torch in accordance with the invention, the welding torch comprises a block-like body provided with two parallel channels in a longitudinal direction of the block-like body for guiding electrode wires through the block-like body, wherein each channel has a first part at an entry side of the channel and a second part at the outlet side of the channel, the first part has a first diameter, and a second part has a second diameter, smaller than the first diameter, such that the second part tightly fits around the electrode wire for forming an electrical contact for conducting an electric welding current to the electrode wires, and wherein the block-like body comprises at least two elongated parts, each elongated part provided with at least one groove in the longitudinal direction such that when the elongated parts are assembled the channels are formed; and a spring loaded device configured to hold to the elongated parts together. In this arrangement the spring loaded connector maintains a sufficient and directional constant contact pressure and cross-sectional area for passing the electrode current through the electrode wires and not to lose contact with the electrode wire or the melt because of the generated heat and provides a stable process that can be obtained by securing adequate and precise electrode placements in the weld joint. The reduced dimensions of the welding torch enables further reduction of the welding groove dimensions in the connecting sides of the plates or shells, so less material has to be milled away to form the groove and less additional filler material is needed to complete the weld joint. Furthermore, the reduced dimensions and configuration of the welding torch enables the application of two welding torches in the groove to maintain in operation, a melting path between the electrode wires and accelerates the welding process. A further advantage of this arrangement is that the reduced dimensions of the weld joint enables a further reduction in the design thickness of the shell wall and a reduction of the required quantity of steel.

In a particular advantageous embodiment the block-like body comprises a first and a second elongated part, and each elongated part is provided with two parallel grooves in the longitudinal direction. In this arrangement the welding torch comprises only two parts for guiding the electrode wires to the joint.

In an advantageous embodiment of the welding torch, the spring-loaded connector is provided with two holes and two spring plungers adjustably mounted in the holes, wherein the holes are positioned such that, in an assembled state, the respective spring plungers are positioned exactly above the respective channels near the outlet side of the first elongated part for adjusting a pressing force on the electrode wires. In this arrangement the pressure on each of the electrodes wired can be separately adjusted.

In a further embodiment of the welding torch, the outlet side of second elongated part is provided with an abutment for receiving the outlet side of the first elongated part. In this arrangement the first and second elongated part can be attached to each other in stable position and filler material cannot accidentally "escape" out of the clamped torch parts

In a further embodiment of the welding torch the inlet side of the first elongated part is provided with two dome-shaped protrusions, the respective protrusions are located on either sides of the channels. The protrusions provide a stable arrangement of the first and second elongated part wherein a pressure force is directed on the outlet side of the channels. The protrusions can made of rivets, they also ensure proper and constant electrical contact between torch holder and torch parts

In a different embodiment the body part comprises a first elongated part, provided with a first groove at a first side in the longitudinal direction and a second groove at an opposite side in the longitudinal direction of the first elongated part, a second elongated part provided with a third groove in the longitudinal direction at a first side of the second elongated part and third elongated part provided with a fourth groove in the longitudinal direction at a first side of the third elongated part. An advantage of this arrangement is that it provides a further reduction of the dimensions of the welding torch.

In a further embodiment the spring-loaded device is provided with two holes and two spring plungers adjustably mounted in the holes, and wherein the holes are positioned such that, in an assembled state, both spring plungers are directed to the centre line of the channels. This arrangement provides a reduction of the dimensions of spring loaded device in the direction of the gap width and provides a further reduction of the gap width of the weld.

In a further embodiment of the welding torch, the outlet side of the channels have two rhombic apertures for the respective electrode wires. The rhombic or diamond shaped apertures secures a defined position of the electrode wires at the outlet of the welding torch, even when the apertures exhibit some wear.

In a further embodiment of the welding torch a portion of a side near the outlet of the first or second elongated part is provided with an electrically insulating layer. The electrically insulating layers prevent unwished electrical contacts between the welding torch and metal parts.

In a further embodiment of welding torch wherein a side of the elongated body near the outlet is partially bevelled. The bevelled side near the outlet of the welding torch can further reduce the dimensions near the end of the welding torch. An advantage thereof is that a welding groove can be further reduced.

In a further embodiment of welding torch, the wherein the block-like body comprises an alloy of copper, chromium and zirconium. This is a hardened copper alloy with excellent hardness and high electrical and thermal conductivity.

The object is also achieved by a welding device comprising a first and a second welding torch according to any of the claims 1-12, wherein the welding device further comprises a transport device for moving a part to be welded relatively to the first and second welding torches in a welding direction, and wherein the first welding torch is mounted in a first direction perpendicular to the welding direction and a second welding torch is mounted in an imaginary plane through the first direction and the moving direction and tilted at an predetermined angle with respect to the first direction, and wherein the first and second welding torch are positioned such that, in operation, a melting path is maintained between the electrode wires of the first and second welding torches. The predetermined angle depends on the dimensions of the first and second welding torched and can be for example 18°. The application of two welding torches reduces the welding time because two adjacent layers of electrode material can be applied almost simultaneously in the groove.

### Short description of drawings

The present invention will be discussed in more detail below, with reference to the attached drawings, in which
Fig. 1 schematically shows schematically an embodiment of the welding device according to the invention;
Fig. 2 schematically shows a cross-section of a partly welded joint;
Fig. 3 schematically shows a cross-section of the welding torch according to a first embodiment of the invention;
Fig. 4 shows schematically a top view of the welding torch according to the first embodiment of the invention;
Fig. 5 shows schematically a side view of the welding torch according to the first embodiment of the invention;
Fig. 6 schematically shows a front view of the outlet side of the welding torch according to an embodiment of the invention;
Fig. 7 shows schematically a part of a welding device comprising two welding torches according to the first embodiment;
Fig. 8 shows schematically a side view of the welding torch according to a second embodiment;
Fig. 9 shows schematically a cross-section perpendicular to the channel of the welding torch of the second embodiment; and
Fig. 10 shows schematically a configuration of two welding torches according to the second embodiment in a welding device.

In the figures like reference numbers indicate like parts.

### Description of embodiments

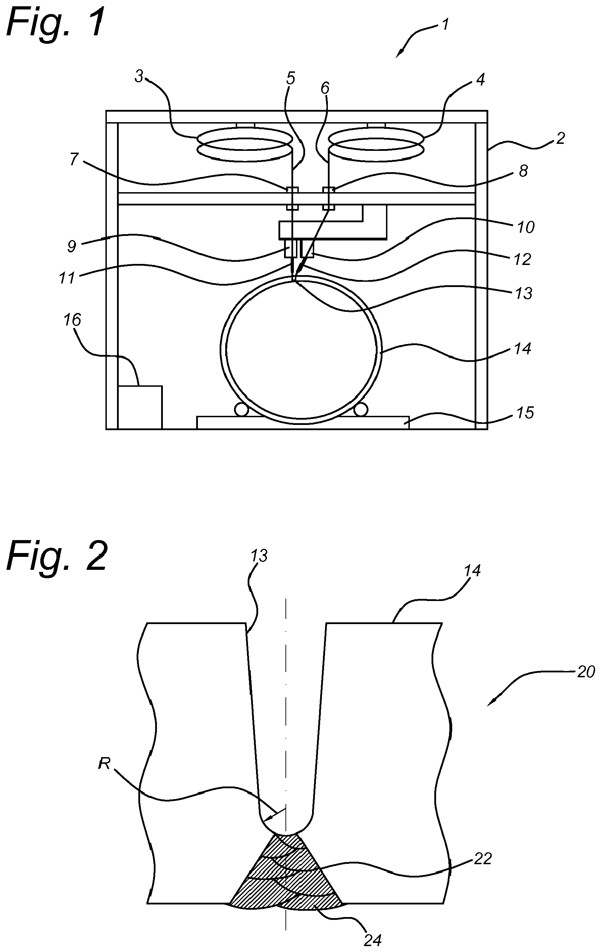

The invention is described with reference to figs. 1 to 10.

Fig. 1 shows schematically an embodiment of a welding device. The welding device 1 comprises a frame 2 provided with electrode wire turntables 3, 4 for providing electrode wires 5, 6 and electrode wire feeders 7, 8. The welding device further comprises a transport device 15 for moving or rotating the cylindrical, tubular or conical structure. In this description this cylindrical, tubular or conical structure is further indicated as shell 14. Furthermore, the welding device comprises welding torch holders 9, 10 and welding torches 11, 12. The shell holder and rotating device 15 are positioned such that a gap or joint 13 of the shell 14 is substantially under the welding torches 11, 12.

The electrode wire feeders 7, 8 are straightening the electrode wires 5, 6 before entering the welding torches 11, 12, and before transport towards the gap 13. The electrode wires 5, 6 can have a diameter of, for example, 2.5 mm.

Furthermore, the welding device comprises a controller 16 arranged to adjust the rotating speed of the shell, the feeding speed of the electrode wire feeders 7,8 and to adjust the mutual distances between the ends of the welding torches 9,10 and the distance the between the ends of the welding torches and the bottom of the gap 13. Furthermore, the controller 16 is arranged to adjust the position of the welding torches automatically with respect to a symmetry axis of the gap so the consecutive welds can be made at defined positions with respect to the side wall in the gap, as is well known to the skilled person.

This welding device can be used for welding large metal structures, for example piles for structures of wind generators and for off-shore platforms. The piles are assembled from the shells. The separate steel plates for forming the shell can have a thickness in a range between 6 to 120 mm and a length in the range between 2 and 4 m. The shell can be formed by rolling for example one or two plates. The longitudinal sides of the shell are then welded by respectively one or two longitudinal welds. The piles are assembled by stacking consecutive shells and welding the circumferences of adjacent shells.

Before the longitudinal welding of the shell, a first groove and a second groove are milled in the joining sides of the shells. Thereafter, the welding is performed firstly at the first groove at the inner side of the shells. Thereafter, the welding is performed at the outer side using the welding device as described with reference to fig. 1. By applying the two welding torches 11, 12, with, in total, four individual electrode wires, two adjacent layers can be provided nearly simultaneous in a single melting path in the gap. Further subsequent layers can be provided in the gap in a next cycle. During the transport in the cycle welding slag can be released from the weld.

The controller 16 is arranged to automatically adjust the distances between the mutual ends of the welding torches 11, 12 and the bottom of the gap during transport of the shell. Furthermore, the controller is arranged to control electrode wire feeders at a transport speed of the electrode wires of about 4 m / min.

Furthermore, the welding device is proved with power sources (not shown) which can be programmed to provide an AC or DC current through the welding torch, the electrode wires and the shell. The welding currents can be in the range between 600 to 875 A for DC welding and in the range between 700 and 950 A for AC welding.

In general, the welding of the shell is performed such that the grooves are asymmetrically positioned with respect to the centre of the steel plate in such a way that the groove at the inner side is less deep than the groove at the outer side of the shell.

Fig 2 shows schematically a cross-section of a partly welded joint 20 in the shell 14. Fig. 2 shows a first welded groove 22 and the second non welded groove or gap 13. In this embodiment the thickness of the steel plate of the shell is, for example, 80mm and the first welded groove 22 has for example a depth of 20mm and the second non-welded groove 13 has a depth of 65mm.

The first welded groove 22 is provided with several layers 24 of electrode material. For example in the second non-welded groove 13 the angle between a side wall and the normal on the plate is for example 4° and the radius R of the bottom part of the second non-welded groove or gap 13 is 7 mm. In another example the angle between the side wall and the normal on the plate is 6.5° and the radius R of the bottom part of the second non-welded groove or gap 13 is 8 mm.

In order to weld the gap 13 of the joint, the welding torches 11, 12 should initially be positioned close to the bottom in the gap 13.

For applying the subsequent layers the welding torches are moved upwards. The welding torch according to this description enables tight positioning of the welding torches in the gap 13 such that two consecutive layers can be nearly simultaneous welded in the gap 13 in a single welding cycle. At least four joints can be welded simultaneously with this welding device. The small dimension of the welding torches enables a smaller gap than conventionally is used. So, less metal should be milled away to form the gap 13 in the plate or shell. The welding torches according to this description can be advantageously applied in the field of narrow-gap welding.

A further advantage is that the reduced gap dimension can provide a reduction in design thickness of the wall of the shell.

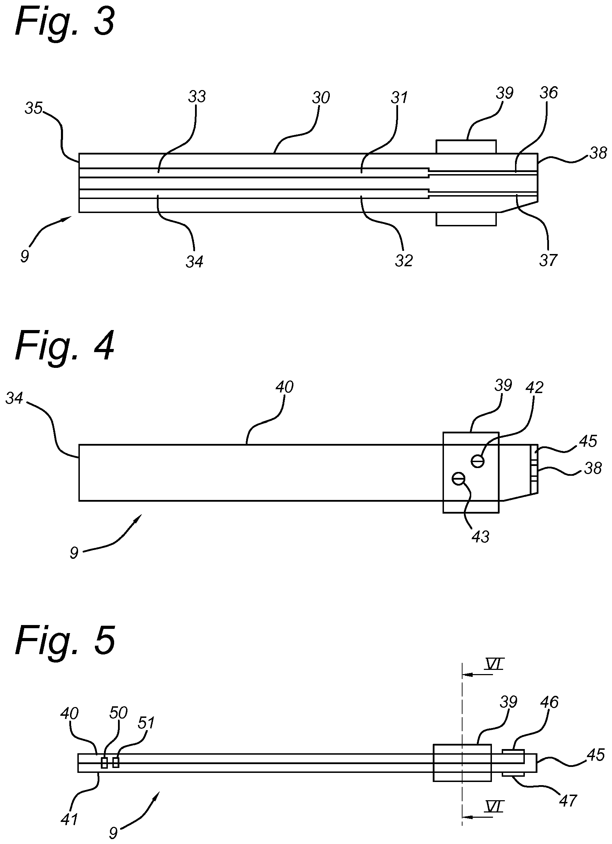

Fig. 3 shows schematically a cross-section of the welding torch 9 according to a first embodiment. that can be applied in the welding device. Fig. 3 shows a block-like body 30 provided with two parallel channels 31, 32 in a longitudinal direction. Furthermore, the block-like body 30 comprises a first and a second elongated part 40,41, each elongated parts is provided with the parallel grooves in the longitudinal direction such that when the elongated first and second parts are connected the channels 31,32 are formed. The channels 31, 32 are configured to guide the electrode wires 5, 6 through the block-like body. Each channel has a first part 33, 34 at the entry side 35 and a second part 36, 37 at the outlet side 38. The second parts 36, 37 of the channels 31, 32 has a slightly smaller diameter than the diameter of the first parts 33, 34 of the channels 31, 32. The diameter of the second part 35, 36 of the channel 31, 32 is such that it tightly fits around the electrode wires 5, 6 for forming an electrical contact for conducting an electric welding current to the electrode wires 5, 6.

Furthermore, the welding torch 9 comprises a spring loaded device 39 configured to hold to the first and second elongated parts 40, 41 together. Furthermore, a side of the elongated body near the outlet 38 can be partially bevelled. This bevelled sides enable close positioning of the welding torches. In this embodiment the dimensions of the welding torch can be for example 160 x 30 x 6 mm (1 x w x h).

Fig. 4 shows schematically a top view of the first elongated body 40, of the welding torch 9 and the spring loaded device 39 in the first embodiment. In this embodiment the spring loaded device 39 is provided with two spring plungers 42, 43 adjustably mounted in the holes in the spring loaded device 39, and wherein the spring plungers 42, 43 are positioned in the spring loaded device 39 such that in an assembled state the respective spring plungers 42, 43 are positioned above the respective channels 31, 32 near the outlet side 38 of the first elongated part 40 for exerting a pressing force on the electrode wires. An advantage of these spring plungers 42, 43 is that the force on each of the channels 31, 32 can be separately adjusted to provide an optimal electrical contact between the respective channels and the electrode wires.

Fig. 5 shows schematically a side view of the welding torch 9 comprising the first and second parts 40, 41 and the spring loaded device 39 of the first embodiment. The elongated parts 40, 41 can be made of, for example, a precipitation hardened CuCrZr alloy (Elmedur X) with excellent thermal conductivity. Furthermore, in an embodiment the outlet side of the second elongated part 41 is provided with an abutment 45 for receiving the outlet side of the first elongated part 40. Furthermore, the inlet side of the first elongated part 40 can be provided with at least two dome-shaped protrusions 50, 51 the respective protrusions are located on either sides of both channels. In an embodiment the respective protrusions are formed by rivets.

Also, a portion of the elongated parts at the outlet side can be provided with an electrically-isolating layer 46, 47 for example a ceramic layer, or aluminumoxide to prevent unwished electrical contacts with the gap.

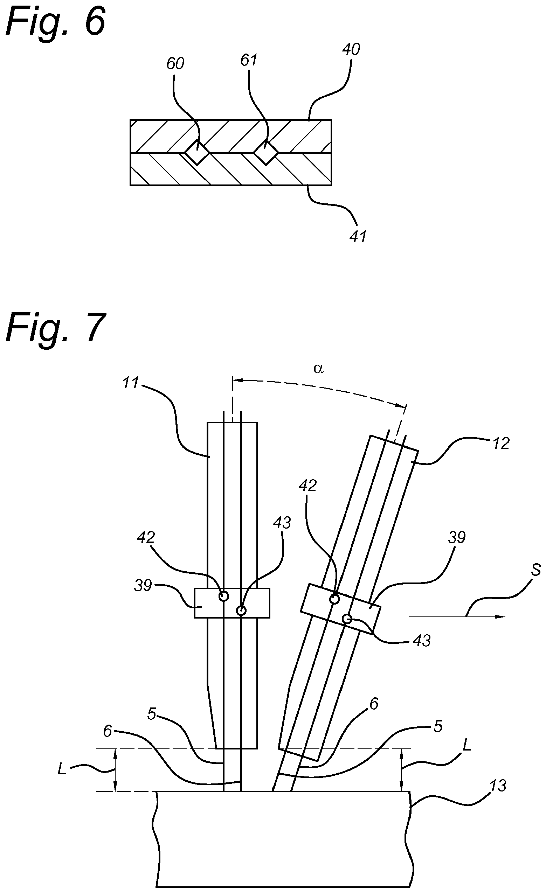

Fig. 6 shows schematically a front view of the outlet side of the welding torch. The front view shows the elongated parts 40, 41 and the rhombic or diamond shaped apertures 60, 61 in the channels for guiding the respective electrode wires. The rhombic shape guarantees a well-defined position of the electrode wires, even when some wearing of the apertures occurs.

Fig. 7 shows schematically a configuration of two welding torches 11, 12 according to the first embodiment in a welding device 1. In this embodiment the welding torches 11, 12 are arranged such that when the transport device is moving the shell in a welding direction S both welding torches can be positioned inside the gap for welding. In this arrangement the first welding torch 11 is mounted in a first direction perpendicular to surface of the shell or normally to the surface and a second welding torch 12 is mounted in an imaginary plane through the first direction and the moving direction s and tilted at a predetermined angle α with respect to the first direction. Furthermore, the controller 16 is arranged to adjust the first and second welding torch 11, 12 such that, in operation, a melting path is maintained between the electrode wires 5, 6 of the first and second welding torch. In this configuration the length L between the end of the welding torches 11, 12 and the gap is 25 mm and the angle α is 18°.

Furthermore, the spring plungers 43,43 are directed in the direction of the gap width of the groove transverse to the moving direction S.

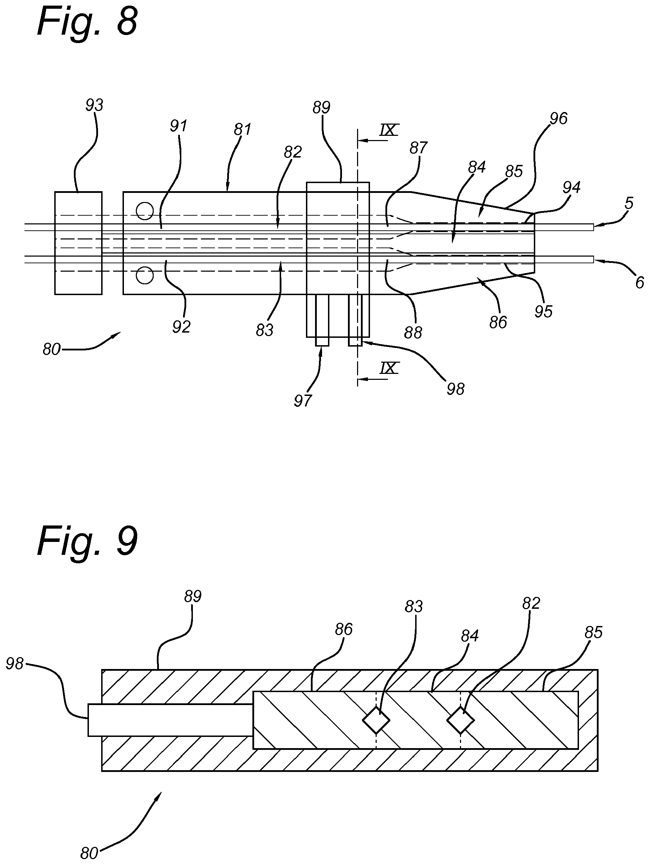

Fig. 8 shows schematically a side view of the welding torch 80 according to a second embodiment of the invention that can be applied in the welding device. Fig. 8 shows a block-like body 81 provided with two parallel channels 82, 83 in a longitudinal direction of the block-body. Furthermore, the block-like body 81 comprises three elongated parts 84, 85, 86. The elongated parts 84, 85, 86 can be made of, for example, a precipitation hardened CuCrZr alloy (Elmedur X) with excellent thermal conductivity. The first elongated part 84 is provided with a first groove at a first side in the longitudinal direction and a second groove at an opposite side in the longitudinal direction and parallel to the first groove. The second elongated part 85 is provided with a third groove in the longitudinal direction at a first side of the second elongated part such that when the elongated first and second parts are connected the channel 82 is formed. Furthermore, the third elongated part 86 is provided with a fourth groove in the longitudinal direction at a first side of the third elongated part such that when the elongated first and third parts are connected the channel 83 is formed. The channels 82, 83 guide the respective electrode wires 5, 6 through the block-like body. Each channel 82, 83 has a first part 91, 92 at the entry side 93 and a second part 94, 95 at the outlet side 96. The second parts 94, 95 of the channels 82, 83 has a slightly smaller diameter than the diameter of the first parts 91, 92 of the channels 82, 83. The diameter of the second part 94, 95 of the channel 82, 83 is such that it tightly fits around the electrode wires 5, 6 for forming an electrical contact for conducting an electric welding current to the electrode wires 5, 6. Furthermore, the outlets of channels 82, 83 for guiding the respective electrode wires can be provided with rhombic apertures. The rhombic shape guarantees a well-defined position of the electrode wires, even when some wearing of the apertures occurs.

Furthermore, the welding torch 80 is provided with a spring loaded device 89 configured to hold to the first, second and third elongated parts 84, 85, 86 together. The spring loaded device 89 is provided with two spring plungers 97, 98. The spring plungers are adjustably mounted in the holes in the spring loaded device 89, such that in an assembled state, both spring plungers 97, 98 are directed to the centre line of the channels 82, 83 of the welding torch for exerting a pressing force on the electrode wires 5, 6. In this arrangement the spring loaded device 89 provides a sufficient and directional constant contact pressure and cross-sectional area for conducting the electrode currents through the electrode wires.

Furthermore, the side of the elongated body near the outlet 85 can be partially bevelled. This bevelled sides enable close positioning of the welding torches 90 in the welding device. In this embodiment the dimensions of the welding torch can be for example 136 x 30 x 6 mm (1 x w x h). Also, a portion of the elongated parts at the outlet side can be provided with an electrically-isolating layer for example a ceramic layer, or aluminumoxide to prevent unwished electrical contacts with the gap.

Fig. 9 shows schematically a cross-section along the line IX perpendicular to the channel 82, 83 of the welding torch 80 of the second embodiment. In this embodiment the spring loaded device is located near the outlet side 96 of the welding torch 80. In Fig. 9 only one spring plunger 98 is shown.

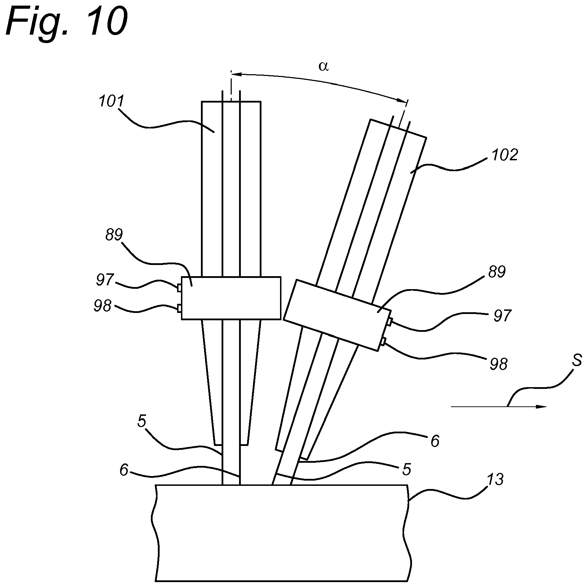

Fig. 10 shows schematically a configuration of two welding torches 101, 102 according to the second embodiment in a welding device 1. In this embodiment the welding torches 101, 102 are arranged such that when the transport device is moving or rotating the shell 13 in a welding direction both ends of the welding torches 101,102 can be positioned further inside the gap for welding and enable narrow-gap welding. In this arrangement the first welding torch 101 is mounted in a first direction perpendicular to surface of the shell or normally to the surface and a second welding torch 102 is mounted in an imaginary plane through the first direction and the moving direction S and tilted at a predetermined angle α with respect to the first direction. Furthermore, the controller 16 is arranged to adjust the first and second welding torch 101, 102 such that, in operation, a melting path is maintained between the electrode wires 5, 6 of the first and second welding torch. In this configuration the length L between the end of the welding torches 101, 102 and the gap is 25 mm and the angle α is 18°.

A difference between the arrangement of torches 11, 12 according the first embodiment shown in Fig. 7 and the arrangement of torches 101,102 according to this second embodiment in Fig.10 is that the spring plungers 97, 98 in the spring loaded device 89 are rotated about 90 degrees with respect to the centre line of the channels and directed along the groove in the direction S compared to the spring plungers 42, 43 of the spring loaded device 39. The advantage of the arrangement of the spring plungers 97, 98 in the torches 101,102 according to the second embodiment is that the space occupied by the spring plungers 97, 97 in the spring load device 101,102 in the gap can be reduced and hence the gap width of the weld can be further reduced with respected to the arrangement of the torches 11, 12 according to the first embodiment.

In the description of the figures, the invention has been described with reference to specific embodiments thereof. It will, however, be evident that various modifications and changes may be made thereto without departing from the scope of the invention as summarized in the attached claims.

In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

In particular, combinations of specific features of various aspects of the invention may be made. An aspect of the invention may be further advantageously enhanced by adding a feature that was described in relation to another aspect of the invention.

## Claims

1. Welding torch for a welding device, the welding torch comprising a block-like body provided with two parallel channels in a longitudinal direction of the block-like body for guiding electrode wires through the block-like body,
wherein each channel has a first part at an entry side of the channel and a second part at the outlet side of the channel, the first part has a first diameter, and a second part has a second diameter, smaller than the first diameter, such that the second part tightly fits around the electrode wire for forming an electrical contact for conducting an electric welding current to the electrode wires,
wherein the block-like body comprises at least two elongated parts, each elongated part provided with at least one groove in the longitudinal direction such that when the elongated parts are assembled the channels are formed; and a spring loaded device configured to hold the elongated parts together.

2. Welding torch according to claim 1, wherein the block-like body comprises a first and a second elongated part, and each elongated part is provided with two parallel grooves in the longitudinal direction.

3. Welding torch according to claim 2, wherein the spring-loaded device is provided with two holes and two spring plungers adjustably mounted in the holes, and wherein the holes are positioned such that, in an assembled state, the respective spring plungers are positioned above the respective channels near the outlet side of the first elongated part for adjusting a pressing force on the electrode wires.

4. Welding torch according to claim 3, wherein the outlet side of the second elongated part is provided with an abutment for receiving the outlet side of the first elongated part.

5. Welding torch according to any of the claims 2-4, wherein the inlet side of the first elongated part is provided with two dome-shaped protrusions, the respective protrusions are located on either sides of both channels.

6. Welding torch according to claim 5, wherein the respective protrusions comprises a rivet.

7. Welding torch according to claim 1, wherein the body part comprises a first elongated part, provided with a first groove at a first side in the longitudinal direction and a second groove at an opposite side in the longitudinal direction of the first elongated part; a second elongated part provided with a third groove in the longitudinal direction at a first side of the second elongated part; and a third elongated part provided with a fourth groove in the longitudinal direction at a first side of the third elongated part.

8. Welding torch according to claim 7, wherein the spring-loaded device is provided with two holes and two spring plungers adjustably mounted in the holes, and wherein the holes are positioned such that, in an assembled state, both spring plungers are directed to the centre line of the channels.

9. Welding torch according to any of the preceding claims, wherein the outlet side of the channels are provided with two rhombic apertures for guiding the
respective electrode wires.

10. Welding torch according to any of the preceding claims, wherein a portion of a side near the outlet of the first or second elongated part is provided with an
electrically-insulating layer.

11. Welding torch according to any of the preceding claims wherein a side of the elongated body near the outlet is partially bevelled.

12. Welding torch according to any of the preceding claims wherein the block-like body comprises an alloy of copper, chromium and zirconium.

13. Welding device comprising a first and a second welding torch according to any of the claims 1-12, wherein the welding device further comprises a transport device for moving a part to be welded relatively to the first and second welding torches in a welding direction, and wherein the first welding torch is mounted in a first direction perpendicular to the welding direction and a second welding torch is mounted in an imaginary plane through the first direction and the moving direction and tilted at a predetermined angle with respect to the first direction, and wherein the first and second welding torch are positioned such that, in operation, a melting path is maintained between the electrode wires of the first and second welding torches.
